Europäisches Patentamt

European Patent Office

Office européen des brevets

(19)

(11) **EP 0 835 727 B1**

(12) **EUROPÄISCHE PATENTSCHRIFT**

(45) Veröffentlichungstag und Bekanntmachung des Hinweises auf die Patenterteilung:
**09.02.2000 Patentblatt 2000/06**

(51) Int Cl.⁷: **B25J 9/16**

(21) Anmeldenummer: **97116649.1**

(22) Anmeldetag: **24.09.1997**

(54) **Verfahren zum maschinellen Verschieben eines Gegenstandes auf einer Ebene in eine Ziellage**

Process of mechanically moving an object on a surface to a destination position

Procédé pour le déplacement mécanique d'un objet sur une surface vers une position de destination

(84) Benannte Vertragsstaaten:
**DE FR GB IT**

(30) Priorität: **11.10.1996 DE 19642016**

(43) Veröffentlichungstag der Anmeldung:
**15.04.1998 Patentblatt 1998/16**

(73) Patentinhaber: **SIEMENS AKTIENGESELLSCHAFT**
**80333 München (DE)**

(72) Erfinder: **Bauer, Jochen**
**86150 Augsburg (DE)**

(56) Entgegenhaltungen:
- **LYNCH K M ET AL: "STABLE PUSHING: MECHANICS, CONTROLLABILITY, AND PLANNING" INTERNATIONAL JOURNAL OF ROBOTICS RESEARCH, Bd. 15, Nr. 6, Dezember 1996, Seiten 533-556, XP000643806**
- **BALORDA Z ET AL: "REDUCING POSITIONING UNCERTAINTY OF OBJECTS BY ROBOT PUSHING" IEEE TRANSACTIONS ON ROBOTICS AND AUTOMATION, Bd. 10, Nr. 4, 1.August 1994, Seiten 535-541, XP000460269**
- **LYNCH K M ET AL: "MANIPULATION AND ACTIVE SENSING BY PUSHING USING TACTILE FEEDBACK" PROCEEDINGS OF THE IEEE/RSJ INTERNATIONAL CONFERENCE ON INTELLIGENT ROBOTS AND SYSTEMS, RALEIGH, NC., JULY 7 - 10, 1992, Bd. 1, 7.Juli 1992, INSTITUTE OF ELECTRICAL AND ELECTRONICS ENGINEERS, Seiten 416-421, XP000339036**

**Beschreibung**

Die Erfindung bezieht sich auf ein Verfahren zum Verschieben von Gegenständen auf einer Ebene durch einen Manipulator in eine genau definierte Lage.

Häufig müssen in Fertigungsbereichen Halbzeugbehälter oder Werkstücke genau positioniert werden. Autonome mobile Systeme, welche Tätigkeiten verrichten müssen beispielsweise Hindernisse auf ihrem Weg erkennen und eventuell mit Hilfe eines Manipulators beiseite schieben. Bisherige Arbeiten zum Verschieben von Gegenständen auf Ebenen beschränken sich zum einen auf Gegenstände mit bekannter Form [5,7,1,3,4]. In diesen Arbeiten wird das Schieben mit einem sensorlosen Balken bzw. Schild durchgeführt und es gelingt dabei einen Gegenstand in einer Ebene in Position und Ausrichtung exakt zu positionieren. Die Form des Gegenstandes muß jedoch bekannt sein und ist auf konvexe Polynome beschränkt. Das Verschieben kann ebenfalls mit Hilfe von zweifingrigen Greifern als Schieber durchgeführt werden [2]. In [6] wird mit Hilfe eines drehbar gelagerten Balkens als Schieber, wobei diese im Drehgelenk einen Winkelsensor aufweist unter variabler Kraftrichtung ein Gegenstand verschoben. Damit ist es möglich die Orientierung des geschobenen Gegenstandes zu messen. Eine andere Lösung [8] benutzt zum Verschieben eines Gegenstandes eine runde Spitze und die Lage des verschobenen Gegenstandes wird mit Hilfe eines Bildverarbeitungssystems und einer Kamera erfaßt. Mit diesen Verfahren kann jedoch keine exakte Positionierung eines Gegenstandes mit vorab unbekannter Form in seiner Ziellage durchgeführt werden, denn seine Orientierung im Ziel bleibt dabei unberücksichtigt. Weitere Arbeiten zu diesem Thema sind nicht bekannt.

Die Druckschrift wird als nachstliegender Stand der Technik angesehen offenbart ein Verfahren zum maschinellen Verschieben eines Gegenstandes in eine Ziellage und Drehorientierung auf einer Ebene, bei dem der Drehwinkel zwischen der Ausgangsdrehorientierung und Zieldrehorientierung des Gegenstandes als Verdrehung ermittelt wird,

bei dem mindestens die Wegstrecke zwischen Ausgangslage und Ziellage des Gegenstandes als Verschiebung ermittelt wird,

und bei dem der Gegenstand unter Krafteinwirkung (KP) in einem Kraftangriffspunkt mit variablem Kraftangriffswinkel unter Überwachung seiner Lage und Drehorientierung mindestens um die Verdrehung verdreht und um die Verschiebung verschoben wird.

Die der Erfindung zugrundeliegende Aufgabe besteht darin, ein Verfahren zum Verschieben eines Gegenstandes auf einer Ebene anzugeben, mit dem die exakte Positionierung eines Gegenstandes von unbekannter Form in einer Ziellage durchgeführt werden kann.

Diese Aufgabe wird gemäß den Merkmalen des Patentanspruches 1 gelöst.

Weiterbildungen der Erfindung ergeben sich aus den abhängigen Ansprüchen.

Ein besonderer Vorteil des erfindungsgemäßen Verfahrens besteht darin, daß es unter Zuhilfenahme sehr einfacher Mittel und unter Voraussetzung einer bekannten Zielposition mit einer Verschiebekraft unter variablem Kraftangriffswinkel in einem speziell definierten Kraftangriffspunkt eine exakte Positionierung des zu verschiebenden Gegenstandes durchführt.

Vorteilhaft kann die Lage und Ausrichtung des Gegenstandes nach dem erfindungsgemäßen Verfahren mittels eines optischen Sensors und einem Bildverarbeitungssystem durchgeführt werden.

Vorteilhaft kann die Lage und Ausrichtung des Gegenstandes nach dem erfindungsgemäßen Verfahren mit einem mechanischen Sensor wie beispielsweise einem Winkelgeber oder druckempfindlichen Sensoren an einer Meßspitze durchgeführt werden.

Besonders vorteilhaft wird erfindungsgemäß die Lage des Kraftangriffspunktes für die Verschiebekraft nach einer Heuristik ermittelt, weil diese ohne großen Aufwand durch probeweises Hin- und Herschieben des Gegenstandes exakt den neutralen Kraftangriffspunkt für ein gerades Verschieben des Gegenstandes herausfindet. Vorteilhaft werden dabei insbesondere unterschiedliche Bodenbeläge, sowie damit verbundene unterschiedliche Reibungskoeffizienten bzw. Haftbedingungen des Gegenstandes an seiner Unterseite berücksichtigt.

Besonders vorteilhaft werden zur Bestimmung der Lage des Kraftangriffspunktes für die Verschiebekraft die angegebenen Gleichungen benutzt, da damit eine sehr genaue Schätzung der Position des Kraftangriffspunktes an einer zielabgewandten Seite des Gegenstandes durchgeführt werden kann.

Vorteilhaft wird der Winkel unter welchem die Verschiebekraft im Kraftangriffspunkt angreift nach der erfindungsgemäßen Formel bestimmt, da damit eine exakte Positionierung und eine möglichst schnelle Verschiebung des Gegenstandes erreicht wird.

Im folgenden wird die Erfindung anhand von Figuren weiter erläutert.

Figur 1    gibt ein Beispiel zur Ermittlung des Kraftangriffspunktes nach dem erfindungsgemäßen Verfahren an.

Figur 2    zeigt ein Beispiel zur Verschiebung eines Gegenstandes nach dem erfindungsgemäßen Verfahren.

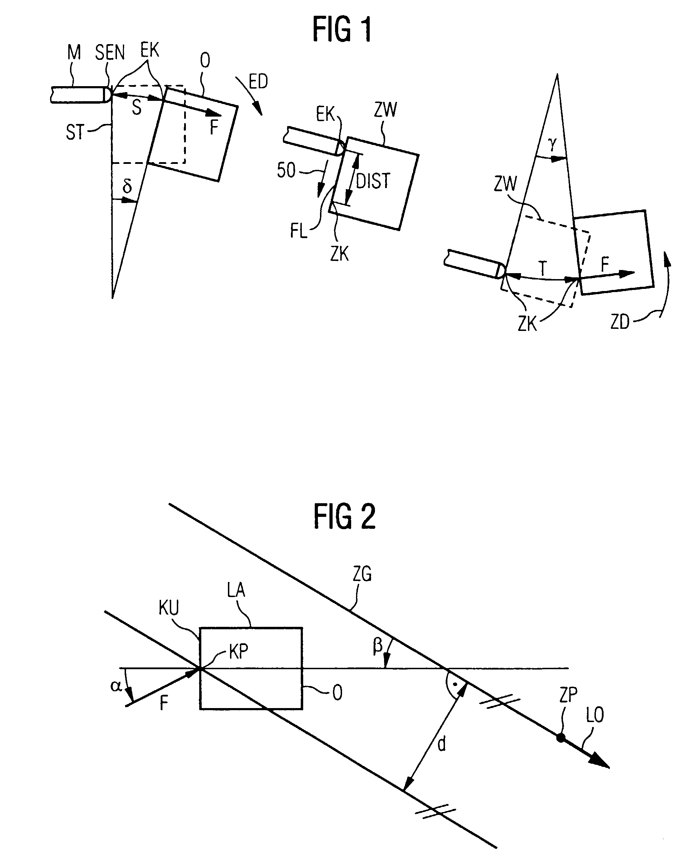

In Figur 1 ist ein Beispiel zur Ermittlung eines Kraftangriffspunktes für das Angreifen der Verschiebekraft an einem zu verschiebenden Gegenstand angegeben. Nach dem erfindungsgemäßen Verfahren soll dabei insbesondere erreicht werden, daß eine Kraft, welche in diesem Punkt an dem Gegenstand angreift und senkrecht zur Oberfläche des Gegenstandes wirkt den Gegenstand exakt in Richtung des Kraftvektors bewegt.

In Figur 1 sind dabei von links nach rechts drei Phasen des Verfahrens dargestellt. Der zu verschiebende Gegenstand O befindet sich beispielsweise zu Beginn in einer Startlage ST. Aus dieser Startlage wird er beispielsweise mit Hilfe eines Manipulators M, welcher eine Kraft F in einem ersten Kontaktpunkt EK ausübt, verschoben und dabei um einen Winkel δ verdreht, wobei der erste Kontaktpunkt EK eine Strecke S zurücklegt, welche gemessen wird. Beim Verschieben des Gegenstandes O kann beispielsweise eine Geschwindigkeitsregelung für den Manipulator eingesetzt werden, wobei die aufzubringende Kraft beispielsweise durch einen Kraftmeßsensor SEN, welcher beispielsweise richtungsabhängig detektieren kann, gemessen wird. Es ist dabei festzustellen, daß sich der Gegenstand O in eine erste Drehrichtung ED verdreht hat, wodurch der Winkel δ im Vergleich zur Ausgangslage entstanden ist. Bei der Durchführung dieses heuristischen Verfahrens zur Bestimmung des Kraftangriffspunktes ist insbesondere zu beachten, daß der Manipulator in einem Kraftangriffspunkt angreifen sollte, welcher sich auf einer zielabgewandten Seite des Gegenstandes O befindet. Beispielsweise besitzt die Manipulatorsteuerung Kenntnisse von der Umgebung des Gegenstandes und kann anhand der Zielkoordinaten und der Erfassung der Geometrie des Objektes einen geeigneten ersten Kraftangriffspunkt EK bestimmen. Die Lage des Gegenstandes kann dabei sowohl mit Hilfe optischer als auch mit Hilfe mechanischer Mittel festgestellt werden. Insbesondere können dabei Bildverarbeitungsmethoden oder mechanische Sensoren, wie beispielsweise Winkelmeßsensoren oder kraftrichtungsabhängige Sensoren verwendet werden. Gemäß der Heuristik zur Ermittlung eines geeigneten neutralen Kraftangriffspunktes auf der Seite FL des Gegenstandes O wird nun in der mittleren Darstellung von Figur 1 versucht diesen Punkt einzugrenzen, indem der Manipulator M in Richtung eines Pfeiles 50 verschoben wird. Dabei ist insbesondere zu beachten, daß die Verschiebung des Manipulators entlang der Seite FL in Drehrichtung ED erfolgen sollte. Hierdurch wird gewährleistet, daß er sich zumindest dem neutralen Kraftangriffspunkt für die Verschiebkraft annähert. In der Mitte von Figur 1 ist der Gegenstand O in einer Zwischenlage ZW dargestellt. In der rechten Teildarstellung von Figur 1 hat der Manipulator M seine Endposition eingenommen und befindet sich nun in einem zweiten Kontaktpunkt ZK. In diesem zweiten Kontaktpunkt ZK wird beispielsweise die Kraft F für eine Verschiebung in einem exakt definierten Zeitintervall aufgebracht. Bevorzugt sollte dieses Zeitintervall genau so lange dauern wie das Zeitintervall, welches in der Ausgangsphase im Kontaktpunkt EK zur Verschiebung des Gegenstandes aufgewandt wurde. Wie erkannt werden kann, wird der Gegenstand O aus der Zwischenlage ZW in eine zweite Drehrichtung ZD verdreht wodurch ein Verdrehungswinkel γ entsteht. Nach dem Verfahren zur Ermittlung eines geeigneten Kraftangriffspunktes, eines neutralen Kraftangriffspunktes, ist nun bekannt, da zwei verschiedene Drehrichtungen ED und ZD unter Einwirkung der Kraft auftraten, daß sich zwischen dem Kontaktpunkt EK und dem Kontaktpunkt ZK der neutrale Kraftangriffspunkt befinden muß. Dieser neutrale Kraftangriffspunkt soll nach dem erfindungsgemäßen Verfahren derjenige Punkt sein, an welchem der Manipulator unter variablen Kraftangriffswinkeln den Gegenstand ins Ziel verschiebt. Aus den bekannten Daten, welche bei den beiden Verschiebungen erfaßt wurden, d. h. im Fall des Kontaktpunktes EK der Winkel δ und die Strecke S und im Fall des Kontaktpunktes ZK der Winkel γ und die entsprechende Verschiebungsstrecke, welche hier als T dargestellt ist, kann dann ein Verhältnis gebildet werden, aus welchem der zwischen dem ersten und dem zweiten Kontaktpunkt befindliche neutrale Kontaktpunkt bestimmt werden kann. Beispielsweise werden hierzu Radien gebildet, wozu beispielsweise die Strecke S durch den Winkel δ gemäß Gleichung 2 dividiert wird.

$$r_a = \frac{S}{\delta} \text{ und } r_b = \frac{T}{\gamma} \qquad (2)$$

Dasselbe Verhältnis kann für den zweiten Kontaktpunkt mit dem Winkel γ und der Strecke T gebildet werden. Aus diesen beiden Verhältnissen und aus der Strecke DIST, welche sich zwischen dem ersten und dem zweiten Kontaktpunkt befindet, läßt sich gemäß Gleichung 3 die Lage des neutralen Kraftangriffspunktes n bestimmen.

$$n \approx (a - b) \frac{|r_a|}{|r_a - r_b|} + b \qquad (3)$$

Hierin bezeichnen a und b die Koordinaten des ersten und zweiten Kontaktpunktes. In diesem Punkt läßt sich nach dem erfindungsgemäßen Verfahren eine Kraft aufbringen, mit welcher der Gegenstand verschoben und genau positioniert werden kann.

Figur 2 veranschaulicht die Verschiebung eines Gegenstandes O in eine Zielposition ZP und in eine Orientierung LO. Zur Verschiebung des Gegenstandes soll beispielsweise eine Kraft F aufgebracht werden. Diese Kraft wird bevorzugt in einem Kontaktpunkt KP aufgebracht, der sich dadurch auszeichnet, daß er bei senkrechtem Einwirken der Kraft F auf die Seite KU des Gegenstandes O eine Verschiebung in Richtung des Kraftvektors bewirkt. D. h. wenn in diesem Punkt KP eine Kraft senkrecht zur Seite KU angreift, dann bewegt sich der Gegenstand ohne sich dabei zu verdrehen. Gemäß der Erfindung ist nun ein Winkel β zu bestimmen, unter welchem der Gegenstand O verdreht werden muß, damit er eine Zielorientierung LO einnehmen kann. Hierzu wird beispielsweise die Gerade ZG durch den Zielpunkt ZP in Richtung der Zielorientierung LO als Verlängerungsgerade dargestellt. Beispielsweise soll durch das erfindungsgemäße Verfahren, wie hier in Figur 2 dargestellt, der Kontaktpunkt KP später im Zielpunkt ZP zu liegen kommen. Weiterhin soll sich die lange Seite LA des Gegenstandes O parallel zur Zielgerade ZG befinden. Bevorzugt wird hier gemäß der Erfindung noch der Abstand d des Kontaktpunktes KP zur Zielgeraden ZG bestimmt. Der Winkel unter welchem die Kraft F dann im Kraftangriffspunkt KP angreifen soll ergibt sich nach dem erfindungsgemäßen Bewegungsgesetz nach Gleichung 1.

$$\alpha = K_\beta\, \beta + K_d d \qquad (1)$$

mit:

$\alpha$     Kraftangriffswinkel begrenzt auf den Reibungskonus zwischen Manipulator und Oberfläche des Gegenstandes

$\beta$     Verdrehwinkel; $|\beta| < \pi/2$

d     Abstand des Kraftangriffspunktes zur Zielgeraden ZG

$K_d, K_\beta$     Regelparameter

Für $K_\beta$ wird bevorzugt 5 und für $K_d$ bevorzugt 10 gewählt. Weiterhin sollte dabei beachtet werden, daß $|\beta|$ nicht größer als $\pi/2$ sein darf. Es ist ebenfalls zu beachten, daß die Verschiebung des Gegenstandes O im Kraftangriffspunkt KP sowohl mit einem Einpunktkontakt, als auch mit einem Zweipunktkontakt durchgeführt werden kann. Insbesondere hängt dies von der Beschaffenheit der Seite KU bzw. der Form der Seite KU ab. Bei einem Einpunktkontakt sollte jedoch beachtet werden, daß sich der Winkel $\alpha$ innerhalb des Reibungskonus zwischen der Manipulatorspitze und der Oberfläche befinden muß, da der Manipulator sonst von der Oberfläche abrutschen würde. Weiterhin ist zu beachten, daß wegen dieser Bedingung der Gegenstand nicht innerhalb einer beliebig kleinen Entfernung von dem Zielpunkt ZP unter der Zielorientierung LO positioniert werden kann. Der Mindestabstand, der erforderlich ist hängt dabei von der Entfernung d dem Winkel $\beta$ und dem Drehverhalten des Objektes bzw. des Gegenstandes O ab. Um das Schiebeverhalten des Gegenstandes O herauszufinden und damit den neutralen Kontaktpunkt KP zu ermitteln, kann es fallweise auch sinnvoll sein eine Verschiebung des Gegenstandes um eine konstante Strecke S oder T, wie beispielsweise um 10 cm vorzunehmen und den dabei auftretenden Verdrehungswinkel $\delta$ bzw. $\gamma$ zu messen. Durch eine geeignete Kraftregelung kann dabei beispielsweise sichergestellt sein, daß die Kraft F während der Verdrehung immer senkrecht zur Oberfläche des Gegenstandes O einwirkt. Bei der Verschiebung des Manipulators zum zweiten Kontaktpunkt ZK wird beispielsweise ein Oberflächenkontur-Verfolgungsverfahren eingesetzt, welches aus dem Stand der Technik bereits bekannt ist. Hierbei wird vorzugsweise auf die Oberfläche eine konstante Kraft ausgeübt, welche nicht dazu führt daß sich der Gegenstand verschiebt, sondern lediglich in Verbindung mit dem Kraftsensor eine Art Tastsinn für den Manipulator gewährleistet, damit dieser sich entlang der Oberfläche bewegen kann. Falls von homogenen Reibungsbedingungen zwischen der Bodenfläche und der Kontaktfläche des Gegenstandes O mit dem Boden ausgegangen werden kann, so kann es auch fallweise sinnvoll sein den Kraftangriffspunkt KP des Kraftvektors mit Hilfe von optischen Bildanalysemethoden zu bestimmen. Dies setzt allerdings voraus, daß der Gegenstand eine homogene Dicke aufweist, so daß zur Findung von Schwerelinien mit Hilfe der Zerlegung seiner Oberfläche in gleiche Flächenteile, ein geeigneter Kraftangriffspunkt gefunden werden kann. Kann ein dredimensionales Modell des Gegenstandes erstellt werden, z.B. mit mehreren Kameras und strukturiertem Licht, so genügt die Voraussetzung der Homogenität des Gegenstandes zur Berechnung eines geeigneten Kraftangriffspunktes.

Literatur:

[1] Srinivas Akella and Matthew T. Mason. Posing polygonal objects in the plane by pushing. In Proceedings of the 1992 IEEE International Conference on Robotics and Automation, pages 2255-2262. Nice, France, May 1992

[2] Zdravko Balorda and Tadej Bajd. Reducing positioning uncertainty of objects by robot pushing. IEEE Transactions on Robotics and Automation, vol.10(no.4):pp.535-541, August 1994

[3] Kevin M. Lynch. The mechanics of fine manipulation by pushing. In Proceedings of the 1992 IEEE International Conference on Robotics and Automation, pages 2269-2276. Nice, France, May 1992

[4] Kevin M. Lynch and Matthew T. Mason. Controllability of pushing. In Proceedings of the IEEE International Conference on Robotics and Automation, volume 1, pages 112-119. Nagoya, Aichi, Japan, May 1995

[5] Matthew T. Mason. Mechanics and planning of manipulator pushing operations. The International Journal of Robotics Research, vol.5(no.3):pp. 53-71, Fall 1986

[6] K. Okawa, J. and Taguchi and K. Yokoyama. Control of mobile robots for the push-a-box operation. In Proceedings of the IECON'93, volume 3, pages 1472-1477. Maui, USA, No. 1993

[7] Michael A. Peshkin and Arthur C. Sanderson. Planning robotic manipulation strategies for sliding objects. In Proceedings of the 1987 IEEE International Conference on Robotics and Automation, pages 696-701. Raleigh, NC, USA, 31 March-3 April 1987

[8] Marcos Salganicoff, Giorgio Metta, Andrea Oddera, and Guilio Sandini. A Vision-Based Learning Method for Pushing Manipulation. In: AAAI, Fall Symposium on Machine Learning in Computer Vision, Raleigh, NC, October 22-24, 1993.

[9] Kevin M. Lynch, Hitoshi Maekawa, Kazuo Taniçe. Manipulation and active sensing by pushing using Tactile feedback. In Proceedings of the IEEE/ RSJ International Conference on Intelligent Robots and Systems, Volume 1, July 1992, Raleight, NC., pages 416-421.

**Patentansprüche**

1. Verfahren zum maschinellen Verschieben eines Gegenstandes in eine Ziellage und Drehorientierung auf einer Ebene,

   a) bei dem der Drehwinkel (β) zwischen der Ausgangsdrehorientierung und Zieldrehorientierung (LO) des Gegenstandes (O) als Verdrehung ermittelt wird,
   b) bei dem mindestens die Wegstrecke (d) zwischen Ausgangslage und Ziellage (LO,ZP) des Gegenstandes (O) als Verschiebung ermittelt wird,
   c) bei dem auf einer zielabgewandten Seite des Gegenstandes (O) ein Kraftangriffspunkt (KP) derart ermittelt wird, daß ein Verschieben des Gegenstandes unter Krafteinwirkung (F) senkrecht zu seiner Oberfläche (KU) in diesem Kraftangriffspunkt den Gegenstand (O) in Kraftrichtung rotationsfrei bewegt,
   d) und bei dem der Gegenstand unter Krafteinwirkung (KP) im Kraftangriffspunkt (KP) mit variablem Kraftangriffswinkel (α) unter Überwachung seiner Lage und Drehorientierung mindestens um die Verdrehung (β) verdreht und um die Verschiebung (d) verschoben wird.

2. Verfahren nach Anspruch 1, bei dem die Lage und/ oder Orientierung des Gegenstandes optisch auf dem Wege der Bildverarbeitung ermittelt wird.

3. Verfahren nach Anspruch 1, bei dem die Lage und/ oder Orientierung des Gegenstandes mechanisch durch Messung (SEN) ermittelt wird.

4. Verfahren nach Anspruch 3 bei dem der Kraftangriffspunkt derart ermittelt wird,

   a) daß mittels eines Manipulators (M) an einer beliebigen ersten Stelle (EK) auf der zielabgewandten Seite eine Verschiebung vorgenommen wird, wobei ein erster Verdrehwinkel (δ), eine erste Verdrehrichtung (ED) und eine erste Verschiebestrecke (S) bestimmt wird,
   b) daß mittels eines Manipulators (M) an einer zweiten Stelle (ZK) auf der Zielabgewandten Seite eine Verschiebung vorgenommen wird, wobei ein zweiter Verdrehwinkel (γ), eine zweite Verdrehrichtung (ZD) und eine zweite Verschiebestrecke (T) bestimmt wird, wobei die zweite Stelle so ausgewählt wird, daß sie sich näher an einem gedachten Drehpunkt der Verdrehung von a) befindet
   c) bei dem falls sich die Drehrichtung in b) gegenüber a) umkehrt die Strecke zwischen der ersten Stelle und der zweiten Stelle (DIST) im Verhältnis der jeweiligen Verschiebestrecken (S,T) und Winkel (δ,γ)zueinander aufgeteilt wird, woraus sich der Kraftangriffspunkt (KP) ergibt und falls sich die Drehrichtung in b) gegenüber a) nicht umkehrt, b) solange erneut mit einer weiteren zweiten Stelle durchgeführt wird, bis dieses Kriterium erfüllt wird.

5. Verfahren nach Anspruch 4, bei dem die Verschiebung in a) und b) eine feste Zeiteinheit lang durchgeführt wird.

6. Verfahren nach Anspruch 4 oder 5, bei dem die Lage der ersten Stelle die Koordinaten $\vec{a}$ und die Lage der zweiten Stelle die Koordinaten $\vec{b}$ sind, der erste und zweite Verdrehwinkel δ und γ und die erste und zweite Verschiebestrecke S und T sind und die Lage des Kraftangriffspunktes n zu:

$$\vec{n} \approx (\vec{a} - \vec{b}) \, \frac{|r_a|}{|r_a - r_b|} + \vec{b} \qquad (3)$$

mit:

$$r_a = \frac{S}{\delta} \text{ und } r_b = \frac{T}{\gamma} \qquad (2)$$

bestimmt wird.

7. Verfahren nach einem der Ansprüche 4 bis 6, bei dem eine Verschiebestrecke (d) des Kraftangriffspunktes (KP) als Abstand zwischen der in Zielorientierung durch die Ziellage verlaufenden Geraden (ZG) bestimmt wird und die Verschiebung nach folgendem Bewegungsgesetz durchgeführt wird:

$$\alpha = K_\beta \beta + K_d d \qquad (1)$$

mit:

α  Kraftangriffswinkel begrenzt auf den Reibungskonus zwischen Manipulator und Oberfläche des Gegenstandes

β  Verdrehwinkel; |β| < π/2

d  Abstand des Kraftangriffspunktes zur Zielgeraden ZG

$K_d, K_\beta$      Regelparameter

## Claims

1. Method for mechanically displacing an object to a destination position and for rotary orientation on a plane,

   a) in which the angle of rotation ($\beta$) between the initial rotary orientation and destination rotary orientation (LO) of the object (O) is determined as a rotation,
   b) in which at least the distance (d) between the initial position and destination position (LO,ZP) of the object (O) is determined as a displacement,
   c) in which a force application point (KP) is determined on a side of the object (O) averted from the destination in such a way that a displacement of the object under the action of a force (F) perpendicular to its surface (KU) at this force application point moves the object (O) without rotation in the direction of the force,
   d) and in which under the action of a force (KP) at the force application point (KP) with a variable angle ($\alpha$) of force application, the object is at least rotated by the rotation ($\beta$) and displaced by the displacement (d) while its position and rotary orientation are monitored.

2. Method according to Claim 1, in which the position and/or orientation of the object is determined optically by image processing.

3. Method according to Claim 1, in which the position and/or orientation of the object are determined mechanically by measurement (SEN).

4. Method according to Claim 3, in which the force application point is determined in such a way

   a) that a displacement is undertaken by means of a manipulator (M) at an arbitrary first point (EK) on the side averted from the destination, a first angle of rotation ($\delta$), a first direction of rotation (ED) and a first displacement distance (S) being determined,
   b) that a displacement is undertaken by means of a manipulator (M) at a second point (ZK) on the side averted from the destination, a second angle of rotation ($\gamma$), a second direction of rotation (ZD) and a second displacement distance (T) being determined, the second point being selected such that it is located closer to an imaginary fulcrum of the rotation of a),
   c) and in which, if the direction of rotation in b) is reversed with respect to a), the distance between the first point and the second point (DIST) is divided in the ratio of the respective displacement distances (S,T) and angles ($\delta,\gamma$) to one another, as a result of which the force application point (KP) is produced, and, if the direction of rotation in b) is not reversed with respect to a), b) is carried out anew with a further second point until this criterion is fulfilled.

5. Method according to Claim 4, in which the displacement in a) and b) is carried out over a fixed time unit.

6. Method according to Claim 4 or 5, in which the position of the first point is given by the coordinates $\vec{a}$ and the position of the second point is given by the coordinates $\vec{b}$, the first and second angles of rotation are $\delta$ and $\gamma$ and the first and second displacement distances are S and T, and the position of the force application point n is determined as:

$$\vec{n} \approx (\vec{a} - \vec{b}) \frac{|r_a|}{|r_a - r_b|} + \vec{b} \qquad (3)$$

where:

$$r_a = \frac{S}{\delta} \text{ und } r_b = \frac{T}{\gamma} \qquad (2)$$

7. Method according to one of Claims 4 to 6, in which a displacement distance (d) of the force application point (KP) is determined as the distance between the straight line (ZG) running through the destination position in the destination orientation, and the displacement is carried out using the following law of movement:

$$\alpha = K_\beta\, \beta + K_d d \qquad (1)$$

where:

$\alpha$      is the force application angle limited to the friction cone between manipulator and surface of the object,
$\beta$      is the angle of rotation; $|\beta| < \pi/2$
d      is the distance of the force application point from the destination straight line (ZG) and
$K_d, K_\beta$      are control parameters.

## Revendications

1. Procédé de déplacement mécanique d'un objet sur un plan dans une position de destination et une orientation de rotation

a) dans lequel l'angle de rotation (β) entre l'orientation de rotation de départ et l'orientation de rotation de destination (LO) de l'objet (O) est déterminé comme torsion

b) dans lequel au moins la distance (d) entre la position de départ et la position de destination (LO, ZP) de l'objet (O) est déterminée comme déplacement;

c) dans lequel, sur un côté de l'objet (O) opposé à la destination, on détermine un point d'application de force (KP) de telle manière qu'un déplacement de l'objet déplace l'objet (O) sans rotation dans la direction de la force en ce point d'application de la force sous l'effet de la force (F) verticalement par rapport à sa surface (KU),

d) et dans lequel l'objet, sous l'effet de la force (KP), est tordu au moins de la torsion (β) sous surveillance de sa position et de son orientation de rotation avec angle d'application de force variable (α) dans un point d'application de la force (KP) et est déplacée par le déplacement (d).

2. Procédé selon la revendication 1, dans lequel la position et/ou l'orientation de l'objet sont déterminées de manière optique par la voie du traitement d'image.

3. Procédé selon la revendication 1, dans lequel la position et/ou l'orientation de l'objet sont déterminées mécaniquement par mesurage (SEN).

4. Procédé selon la revendication 3 dans lequel le point d'application de force est déterminé de telle manière

a) qu'on effectue un déplacement au moyen d'un manipulateur (M) à un premier endroit quelconque (EK) sur le côté opposé à la destination, un premier angle de torsion (δ), une première direction de torsion (ED) et une première distance de déplacement étant déterminés;

b) qu'on effectue un déplacement au moyen d'un manipulateur (M) à un deuxième endroit (ZK) sur le côté opposé à la destination, un deuxième angle de torsion (γ), une deuxième direction de torsion (ZD) et une deuxième distance de déplacement (T) étant déterminés, le deuxième endroit étant choisi de manière à ce qu'il se trouve plus près d'un point de rotation imaginaire de la torsion de a), et

c) dans lequel, si la direction de rotation s'inverse en b) par rapport à a), la distance entre le premier endroit et le deuxième endroit (DIST) est divisée en rapport de chaque distance de déplacement (S, T) et angle (δ, γ), ce qui fait ressortir le point d'application de force (KP), et si la direction de rotation ne s'inverse pas en b) par rapport à a), b) est, tant que renouvelé, effectué avec un deuxième endroit supplémentaire jusqu'à ce que ce critère soit rempli.

5. Procédé selon la revendication 4, dans lequel le déplacement en a) et b) est effectué durant une unité de temps fixe.

6. Procédé selon les revendications 4 ou 5, dans lequel la position du premier endroit sont les coordonnées $\vec{a}$ et la position du deuxième endroit sont les coordonnées $\vec{b}$, les premier et deuxième angles de torsion sont δ et γ et les première et deuxième distances de déplacement sont S et T, et la position du point d'application de force n est déterminé à :

$$\vec{n} \approx (\vec{a} - \vec{b})\,\frac{|r_a|}{|r_a - r_b|} + \vec{b} \qquad (3)$$

avec

$$r_a = \frac{S}{\delta} \;\text{und}\; r_b = \frac{T}{\gamma} \qquad (2)$$

7. Procédé selon l'une quelconque des revendications 4 à 6, dans lequel une distance de déplacement (d) du point d'application de force (KP) est déterminée comme la distance entre les droites (ZG) passant dans la direction de destination par la position de destination et le déplacement est effectué selon la loi sur le mouvement suivante:

$$\alpha = K_\beta \beta + K_d d$$

avec

α angle d'application de force limité au cône de frottement entre le manipulateur et la surface de l'objet

β angle de torsion ; $|\beta| < \pi/2$

d distance du point d'application de force par rapport à la droite de destination ZG

$K_d$, $K_\beta$ paramètres de réglage.

# FIG 1

# FIG 2